# EUROPEAN PATENT SPECIFICATION

(11) **EP 0 596 687 B1**
(45) Date of publication and mention of the grant of the patent: **20.12.2000**
(21) Application number: 93308723.1
(22) Date of filing: 01.11.1993
(51) Int. Cl.: H04N 5/445

(54) **Broadcasting mode name display apparatus**
Gerät mit Anzeige für Rundfunkbetriebsart
Dispositif d'affichage du type de transmission

(30) Priority: 31.10.1992 KR 9220462
(43) Date of publication of application: 11.05.1994
(73) Proprietor: SAMSUNG ELECTRONICS CO., LTD., Suwon-city, Kyungki-do 441-373 (KR)
(72) Inventor: Yoo, Jaechern, Seoul (KR)
(74) Representative: Stanley, David William

(56) References cited:
- EP-A- 0 488 337
- US-A- 5 237 420
- PATENT ABSTRACTS OF JAPAN vol. 15, no. 308 (E-1097) 7 August 1991 & JP-A-03 110 981 (TOSHIBA) 10 May 1991
- PATENT ABSTRACTS OF JAPAN vol. 11, no. 113 (E-497) 9 April 1987 & JP-A-61 261 973 (SONY) 20 November 1986
- PATENT ABSTRACTS OF JAPAN vol. 16, no. 116 (E-1181) 24 March 1992 & JP-A-03 286 688 (HITACHI) 17 December 1991
- PATENT ABSTRACTS OF JAPAN vol. 15, no. 423 (E-1127) 28 October 1991 & JP-A-03 177 176 (HITACHI) 1 August 1991
- PATENT ABSTRACTS OF JAPAN vol. 15, no. 408 (E-1123) 17 October 1991 & JP-A-03 166 876 (SONY) 18 July 1991
- PATENT ABSTRACTS OF JAPAN vol. 11, no. 387 (E-566) 17 December 1987 & JP-A-62 151 087 (MATSUSHITA ELECTRIC) 6 July 1987

## Description

The present invention relates to video display apparatus.

Generally, a conventional television may lack reality in the images which are displayed on the screen. Thus, a high definition television broadcasting method has been recently proposed for improving reality of the images. Particularly, the proposed high definition television (HDTV) broadcasting method is compatible with existing television (TV) broadcasting methods such as, for example, the NTSC broadcasting method. Thus, an HDTV receiver can display an existing TV signal. To receive the existing TV signal with the HDTV receiver, the HDTV signal is transmitted through one channel, while the existing TV signal is transmitted through another channel. Here, the existing TV signal received in the HDTV receiver is displayed on a screen like the video signal of the HDTV broadcasting method. Thus, it is desirable that the user should discriminate whether the video signal currently displayed on the screen comes from a signal of the HDTV broadcasting method or a signal of the existing TV broadcasting method.

Patent Abstracts of Japan, Volume 15, No. 423 (E-1127) & JP-A-3177176 in the name of Hitachi Limited discloses a television signal of a high definition type is recordable on a conventional VTR and reproducable on a conventional television receiver by performing a conversion of the high definition signal into an NTSC signal. A user has the choice of either recording the HDTV signal in it's original format or in converted format and a display circuit is arranged to provide an indication to the user of the type of television signal input.

EP-A-488377 (Hitachi) discloses a magnetic recording apparatus of the rotary head helical scan type which can selectively record input information signals of a plurality of signal formats, inter alia a high definition television signal and a NTSC signal. The apparatus comprises an input signal kind discriminating circuit, a controller for generating control output signals to set each section of the magnetic recording apparatus into a predetermined mode on the basis of a recording mode command, a recording signal processing circuit which is respectively switched to a predetermined mode in accordance with an output signal of the controller, and a servo control circuit, wherein there is an effect such that one magnetic recording apparatus can automatically record the input signals via a plurality of formats such as NTSC signal, HD signal, and the like. The apparatus further comprises a reproduction means for reading the recorded video signal from the recording medium and display means for displaying the selected video signal, the kind of input signal and the recording mode. In the arrangement of this European application, a video recorder is disclosed in which different types of video cassettes are discriminated by means of a hardware discrimination and, in certain circumstances, the user is able to chose whether or not the received signal is to be recorded in a given type of mode.

Preferred embodiments of the present invention aim to provide an apparatus for displaying a broadcasting mode designation capable of informing a user of a broadcasting mode designation of a reception channel of which the video signal is displayed, by detecting broadcasting mode information from the video signal of the reception channel and displaying the detected broadcasting mode information on a display device for the user.

It is another aim to provide an apparatus for displaying a broadcasting mode name capable of informing a user of a broadcasting mode name of a currently displayed video signal, by recording both a video signal of a selected channel and broadcasting mode information of the video signal on a recording medium and detecting the broadcasting mode information of the video signal during a reproduction operation to display the detected broadcasting mode information on a display device.

According to the invention, there is provided an apparatus for displaying a broadcasting mode designation for use in a video device for recording and reproducing a video signal of a high definition television broadcasting mode and another video signal of a standard television broadcasting mode, both of which kinds of video signals may be input as an externally applied video signal through reception channels, said apparatus comprising:
first detection means for demodulating the externally applied video signal and for detecting a mode designation signal signifying whether the demodulated video signal is in the high definition television broadcasting mode or in the standard television broadcasting mode;
mode conversion means for: processing demodulated standard TV and HDTV signals output from the first detection means to provide a processed video output signal such that, if the externally applied video signal corresponds to a standard TV signal, the demodulated standard TV signal is converted into a video signal which can be displayed on a display means of a high definition television broadcasting type and, if the externally applied video signal is already of a high definition television broadcasting type, the demodulated HDTV signal is not mode converted; and converting the thus processed video output signal into an analog video output signal;
recording means for receiving the processed video signal output from said mode conversion means and for recording that video signal, together with the mode designation signal detected by said first detection means, onto a recording medium;
reproduction means for reading the recorded video signal and the recorded mode designation signal from the recording medium;
second detection means for detecting the mode designation signal from the signals read by reproduction means;
switching means for receiving the analog video output signal and the read video signal from said mode conversion means (30) and said reproduction means, respectively, and selectively outputting a selected one of the analog video output signal and the read video signal, wherein the selection by said switching means is governed by a reception mode signal (HD/) and a reproduction mode signal (PB/);
display means for displaying the selected video signal output from said switching means;
a microprocessor for generating a control signal controlling display of the mode designation signal detected by said first detection means and the recorded mode designation signal detected by said second detection means on said display means in correspondence with the selected video signal currently displayed on said display means; and
processing means for receiving the control signal and processing and displaying the detected/recorded mode designation signal for the selected video signal output on said display means in accordance with the control signal.

Preferably, said processing means comprises an on-screen display signal generator for generating an OSD signal upon receiving the control signal, and a mixer for mixing the selected video signal from said switching means and the OSD signal from said on-screen display signal generator and for supplying the mixed signal to said display means.

Said processing means may comprise two light emitting diodes (LED₁, LED₂) for representing, respectively the high definition television broadcasting mode and the standard television broadcasting mode.

Said second detection means may comprise a sync detector for detecting a sync signal from the read video signal from the reproduction means and a mode designation signal detector for detecting the recorded mode designation signal from the read video signal.

The invention includes an HDTV television and/or video recorder and/or player provided with apparatus according to the invention.

For a better understanding of the invention, and to show how embodiments of the same may be carried into effect, reference will now be made, by way of example, to the accompanying diagrammatic drawings, in which:

In the context of this specification, the term "standard" as applied to a broadcasting method or mode means a non-HDTV method or mode, of which the aforementioned NTSC system is just one example.
Figure 1 (composed of Figures 1A and 1B) is a block diagram of a broadcasting mode name display apparatus;
Figure 2 is a detailed circuit diagram of a second sync detector of Figure 1;
Figures 3A and 3B show a broadcasting channel name and a broadcasting mode name which are respectively displayed on a screen in an embodiment of the present invention; and
Figure 4 (composed of Figures 4A and 4B) is a flowchart diagram for explaining the operation of a microprocessor of Figure 1.

A preferred embodiment of the present invention will be described below in more detail with reference to the accompanying drawings.

A reception mode for receiving a video signal through a reception channel may be classified into a simultaneous-recordable reproduction mode for recording the received video signal and simultaneously displaying the latter on a screen, and a recording mode for only recording the received video signal without displaying the latter on the screen. However, only one embodiment having a reproduction mode (PB) for displaying a video signal recorded on a recording medium in a simultaneous-recordable mode (EE), on a screen will be explained hereinbelow.

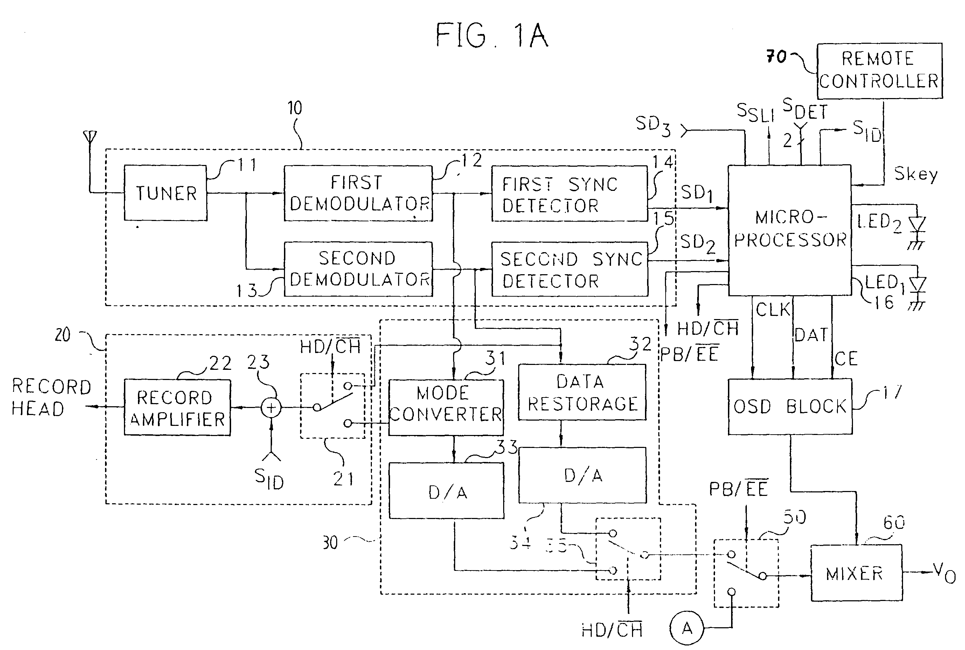

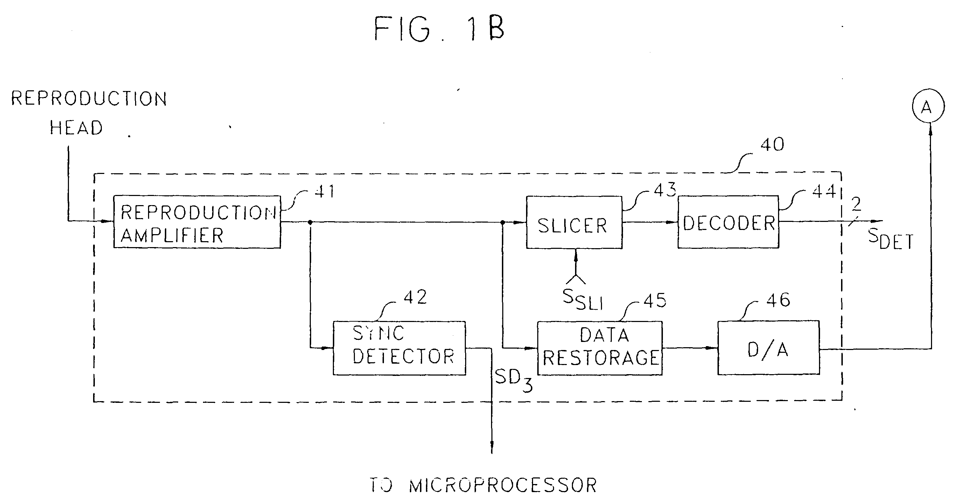

Figure 1 is a block diagram of a broadcasting mode name display apparatus. In Figure 1, a mode detector 10 for detecting broadcasting mode information from a video signal of a selected channel is connected to a mode converter 30 for converting the video signal output from mode detector 10 into a video signal of a high definition television (HDTV) broadcasting mode. Mode converter 30 is connected to a recording block 20 which inserts the broadcasting mode information detected by mode detector 10 into the video signal and records the latter on a recording medium. Also, mode converter 30 is connected to one input end of a switching portion 50 for selecting one of a simultaneous-recordable mode (EE) for recording the received video signal and simultaneously displaying the latter on the screen, and a reproduction mode (PB) for displaying the signal recorded on the recording medium on the screen. A reproduction and detection portion 40 for reproducing the recorded signal through recording block 20 and detecting the broadcasting mode is connected to the other input end of switching portion 50.

Mode detector 10 comprises a tuner 11, first and second demodulators 12 and 13 for receiving the signal of a selected channel through tuner 11 and demodulating the received signal, and first and second sync detectors 14 and 15 for receiving the signals demodulated from first and second demodulators and detecting sync signals SD1 and SD2. The signal output terminals of first and second sync detectors 14 and 15 are connected to a microprocessor 16 for receiving sync signals SD₁ and SD₂ and generating a mode identification signal S_{ID} for discriminating the broadcasting mode of the displayed video signal. In this embodiment, light emitting diodes LED₁ and LED₂ for representing the corresponding broadcasting mode are connected to microprocessor 16.

On the other hand, an on-screen-display (OSD) block 17 for receiving predetermined data DAT from microprocessor 16 and generating a signal for on-screen-displaying the received data is connected to microprocessor 16. The data DAT comprises position information to be displayed on the screen, broadcasting mode information, channel information, etc. A mixer 60 mixes the output signal from switching portion 50 and the output signal from OSD block 17.

Mode converter 30 comprises a high definition signal generator 31 for receiving the output signal from first demodulator 12 and converting the received output signal into a HDTV broadcasting mode, a data restorage portion 32 for receiving the output signal from second demodulator 13 and data-restoring the latter, digital-to-analog converters 33 and 34 for converting the output signals from high definition signal generator 31 and data restorage portion 32, and a second switch 35 for switching the converted analog video signals according to the control of mode signal HD/CH.

Recording block 20 comprises a first switch 21 for selectively outputting the output signals from first demodulator 12 and mode converter 31 under the control of mode switching signal HD/CH supplied from microprocessor 16, an adder 23 for adding mode identification signal Sm supplied from microprocessor 16, and a recording amplifier 22 for amplifying the added signal.

Reproducing and detecting portion 40 comprises a reproduction amplifier 41 for amplifying the video signal which is read through a reproduction head, a sync detector 42 for detecting a sync signal from the amplified signal, a slicer 43 for detecting the broadcasting identification information which is inserted during the recording operation from the amplified signal, a decoder 44 for receiving the output signal of slicer 43 and detecting the broadcasting identification information therefrom, a data restorage portion 45 for data-restoring the amplified signal, and a digital-to-analog converter 45 for converting the restored data into an analog video signal. Microprocessor 16 is constructed so that it is controlled by the output signal of remote controller 70 which can select a channel and operating modes PB/EE.

In Figure 1, microprocessor 16 selects one channel through tuner 11 according to a channel selection signal which is transmitted from remote controller 70 to microprocessor 16. The video signal of the channel selected by tuner 11 is supplied to demodulators 12 and 13. If the video signal supplied from tuner 11 is the signal of the existing TV broadcasting mode, the video signal is normally demodulated by first demodulator 12. On the other hand, if the video signal is the signal of the HDTV broadcasting mode, the video signal is normally demodulated by second demodulator 13. If the reception channel is the channel of the existing TV broadcasting mode, first sync detector 14 detects sync signal SD₁, from the demodulated signal supplied from first demodulator 12. On the contrary, if the reception channel is the channel of the HDTV broadcasting mode, second sync detector 15 detects sync signal SD₂ from the demodulated signal supplied from second demodulator 13.

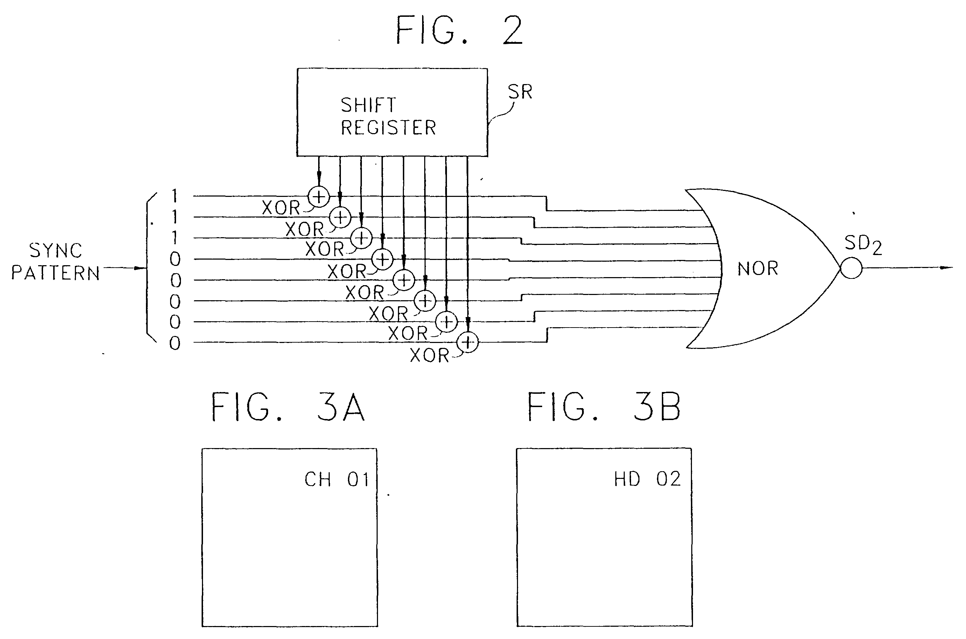

Figure 2 is a circuit diagram showing second sync detector 15 of Figure 1. Particularly, Figure 2 shows a case of using eight bits of "11100000" as a sync pattern. In Figure 2, the video signal of the HDTV broadcasting mode having a pattern of the data bit train and which is demodulated by second demodulator 13 is supplied to a shift register SR. The data bit train stored in shift register SR and the data representing a particular sync pattern is exclusive-OR operated for each bit through the exclusive-OR gates XOR. The result values of the respective operations are NOR-operated through a NOR gate. If the bit train of the data stored in shift register SR has the same value of the sync pattern, the result value which is obtained by logically operating the bit train of both data in order of the exclusive-OR and the NOR operations becomes "1." If the result value is "1," second sync detector 15 outputs the data stored in shift register SR as sync signal SD₂.

In such a manner, the sync detection signal generated from first sync detector 14 or second sync detector 15 is input to microprocessor 16. microprocessor 16 detects input sync signals SD₁ and SD₂ and operates light emitting diodes LED₁ and LED₂ representing the corresponding broadcasting mode. Also, microprocessor 16 generates data DAT having the broadcasting information and the channel information, clock CLK and enable signal CE, so as to be supplied to on-screen-display (OSD) block 17. If the broadcasting signal of the selected channel is the existing TV broadcasting mode, the output signal of first demodulator 12 is converted into the video signal of the HDTV broadcasting mode by HDTV signal generator 31 in mode converter 30.

The thus-converted broadcasting signal is supplied to first switch 21 and digital-to-analog converter 33. First switch 21 is controlled by mode switching signal CH supplied from microprocessor 16 in response to detected sync signal SD₁. Thus, the video signal supplied from HDTV signal generator 31 is supplied to adder 23. Adder 23 adds mode identification signal Sm supplied from microprocessor 16 to a specific portion of the video signal supplied from first switch 21. The video signal output from adder 23 is amplified by recording amplifier 22 and is recorded through a recording head (not shown).

The video signal which is converted into the HDTV broadcasting mode by HDTV signal generator 31 is converted into an analog signal through digital-to-analog converter 33. If the video signal of the selected channel is the signal of the HDTV broadcasting mode, the broadcasting signal of the HDTV broadcasting mode which is demodulated through second demodulator 13 is not restored and supplied to recording block 20 as it is, due to a large amount of the compressed data. Here, second switch 35 is controlled by mode switching signal HD in correspondence to detection from the received video signal.

Recording block 20 adds mode identification SD_{ID} generated in microprocessor 16 by sync signal SD₂ to a specific portion of the output signal second demodulator 13 via adder 23, and amplifies and outputs the added result via recording amplifier 22. The amplified video signal is recorded via the recording head. At the same time as the recording operation, the output signal of second demodulator 13 is applied to data restorage portion 32 in mode converter 30 and then data-restored. The restored data is converted into the analog video signal by digital-to-analog converter 34. The video signals supplied from digital-to-analog converters 33 and 34 are controlled by second switch 35 which receives mode switching signal HD/CH corresponding to the broadcasting mode detected from the received video signal. The video signal of the HDTV broadcasting mode passing through second switch 35 is supplied to one input end of switching portion 50. Switching portion 50 supplies the output video signal supplied from mode converter 30 which is selected by simultaneous-recordable reproduction mode signal EE, to a mixer 60.

On the other hand, OSD block 17 generates an OSD signal for controlling the broadcasting mode and the channel information corresponding to data DAT applied from microprocessor 16 to be displayed with the OSD method.

Mixer 60 mixes the signals supplied from switching portion 50 and OSD block 17 and outputs the mixed signal. Thus, the OSD character composed of the received channel and the broadcasting mode of the received channel are represented as shown in Figures 3A and 3B.

Figures 3A and 3B show the channel name and the mode name displayed on a screen. Figure 3A shows the channel name displayed on the screen by OSD block 17 of Figure 1, when the received channel is the existing TV broadcasting mode. Figure 3B shows the broadcasting mode name displayed on the screen by OSD block 17 of Figure 1, when the received channel is the HDTV broadcasting mode.

If the reproduction mode is selected so that the video signal read from the reproduction head is input to reproduction amplifier 41, the input video signal is amplified in reproduction amplifier 41. The amplified video signal is input to sync detector 42, data restorage portion 45 and slicer 43, simultaneously. Sync detector 42 detects sync signal SD₃ from the reproduction signal and applies the sync signal to microprocessor 16. Microprocessor 16 supplies slicing interval signal S_{SLI} which is determined by applied sync signal SD₃ to slicer 43. Slicer 43 detects a predetermined portion in which mode identification signal S_{ID} is added during the recording operation with respect to the applied reproduction signal, by slicing interval signal S_{SLI}. Decoder 44 decodes the output signal of slicer 43, and detects the value of the added mode identification signal.

Microprocessor 16 receives detected mode identification signal S_{DET} and causes the light emitting diode for the corresponding broadcasting mode display to become in an "ON" state, so as to be supplied to OSD block 17 representing data DAT broadcasting mode. The data which is restored by data restorage portion 45 is supplied to digital-to-analog converter 46. Digital-to-analog converter 46 converts the data into the analog signal. Switching portion 50 selectively outputs the signals output through reproduction and detection portion 40 according to control signal PB supplied from microprocessor 16. Mixer 60 outputs a video signal V₀ which is obtained by mixing the signal output from OSD block 17 and the video signal supplied from switching portion 50. Thus, the video signal displayed on the screen has the OSD character in which the broadcasting mode only is represented.

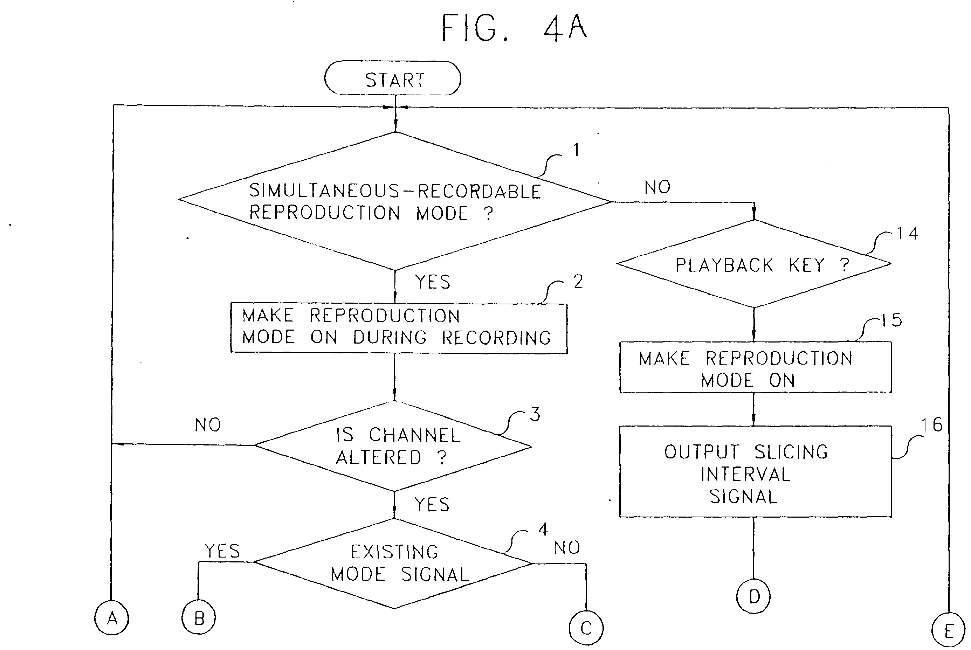

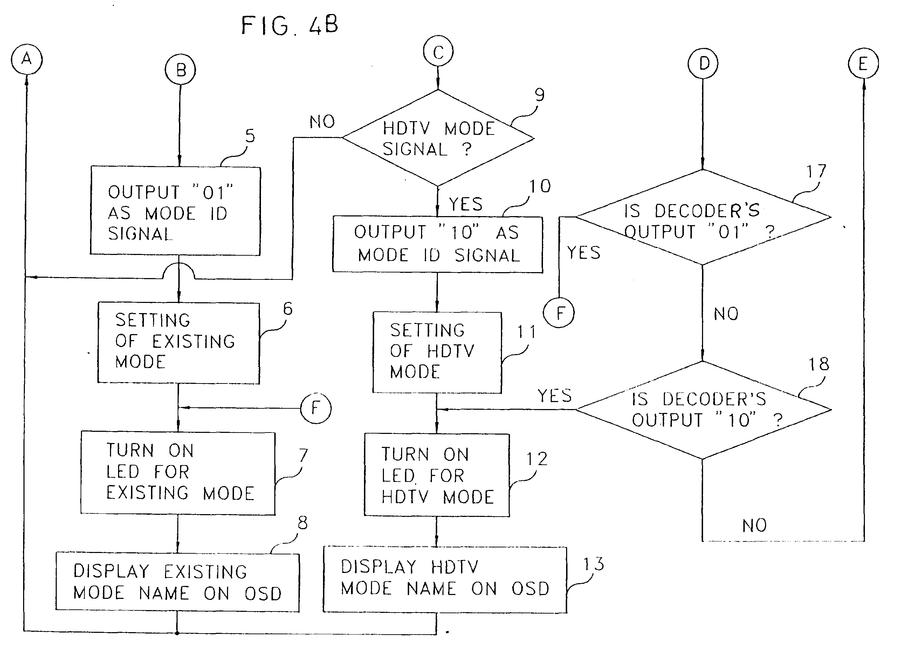

Figure 4 shows a signal processing of microprocessor 16 responding to the manipulation signal of the external keys such as remote controller 70 of Figure 1. In Figure 4, microprocessor 16 judges if the signal applied via remote controller 70 is simultaneous-recordable reproduction signal EE in step 1. If the signal is simultaneous-recordable reproduction signal, the video cassette recorder (VCR) is set to a simultaneous-recordable reproduction mode in step 2. Then, microprocessor 16 checks if the current channel is altered in step 3. If the channel is not altered, the program returns to the input judging step 1 of the simultaneous-recordable reproduction signal. If the channel is altered, it is checked if the broadcasting mode is the existing TV broadcasting mode in step 4. If the broadcasting signal of the current channel is the signal of the existing TV broadcasting mode, microprocessor 16 supplies mode identification signal "01" to be added to a predetermined portion of the recording signal to adder 23 in step 5. Then, the broadcasting mode is set to the existing TV broadcasting mode in step 6. In step 7, light emitting diode LED₁ representing the existing TV broadcasting mode signal is caused to be in an "ON" state. As shown in Figure 3A, the existing TV broadcasting channel is displayed in step 8, to then perform step 1 for judging if the input signal is the simultaneous-recordable reproduction mode.

If the video signal is not the existing TV broadcasting mode, it is detected whether the input signal is the HDTV broadcasting mode in step 9. If the current channel is not the HDTV broadcasting mode either, that is, in case of the channel having no broadcast station, the program returns to step 1 for judging whether the input signal is the simultaneous-recordable reproduction mode. On the contrary, if the current signal is the HDTV broadcasting mode, a mode identification signal "10" is added to a predetermined portion of the recording signal in step 10. Then, the broadcasting mode is set to the HDTV broadcasting mode in step 11. Then, light emitting diode LED₂ representing the HDTV broadcasting mode is caused to be in an "ON" state in step 12, and the HDTV broadcasting mode channel name is displayed on the OSD as shown in Figure 3B.

If the signal applied by remote controller 70 is not simultaneous-recordable reproduction mode signal, it is checked if the signal is a playback key signal for reproducing the recorded signal in step 14. If the playback key signal is detected, the system operation mode is set to the reproduction mode in step 15, and a control signal is generated for reading the video signal recorded together with the broadcasting mode information from the recording medium. Then, slicing interval signal S_{SLI} corresponding to the sync signal detected from the sync detector is supplied to slicer 43 in step 16. In step 17, it is checked if the signal output from decoder 44 is mode identification signal "01." If the mode identification signal is "01," that is, the reproduction signal is the signal of the existing TV broadcasting mode, light emitting diode LED₁ for the existing TV broadcasting mode display is caused to be in an "ON" state in step 7. Then, the current channel name is displayed together with the existing TV broadcasting mode on the OSD screen in step 8. If the read mode identification signal is not "01," it is checked if the mode identification signal is "10" in step 18. If the mode identification signal is "10," that is, the reproduction signal is the HDTV broadcasting mode signal, light emitting diode LED₂ for the HDTV broadcasting mode display is caused to be in an "ON" state in step 12. The, current channel name is displayed together with the HDTV broadcasting mode name in step 13.

The above-described embodiment of a broadcasting mode name displaying apparatus according to the present invention can display if the currently received channel broadcasting mode is the HDTV broadcasting mode or the existing broadcasting mode. Accordingly, the user can easily select the channel. Further, when the broadcasting signal is recorded using an apparatus such as a VCR as well as a TV, the user can see the broadcasting mode of the reproduced video.

A particular embodiment of the present invention has been described above. However, a variety of modifications and applications will be apparent to a person skilled in the art.

The invention may be applied to systems other than NTSC systems - such as, for example, the PAL and SECAM systems used in Europe and elsewhere.

## Claims

1. An apparatus for displaying a broadcasting mode designation for use in a video device for recording and reproducing a video signal of a high definition television broadcasting mode and another video signal of a standard television broadcasting mode, both of which kinds of video signals may be input as an externally applied video signal through reception channels, said apparatus comprising:
first detection means (10) for demodulating the externally applied video signal and for detecting a mode designation signal signifying whether the demodulated video signal is in the high definition television broadcasting mode or in the standard television broadcasting mode;
mode conversion means (30) for: processing demodulated standard TV and HDTV signals output from the first detection means to provide a processed video output signal such that, if the externally applied video signal corresponds to a standard TV signal, the demodulated standard TV signal is converted into a video signal which can be displayed on a display means of a high definition television broadcasting type and, if the externally applied video signal is already of a high definition television broadcasting type, the demodulated HDTV signal is not mode converted; and converting the thus processed video output signal into an analog video output signal;
recording means (20) for receiving the processed video signal output from said mode conversion means (30) and for recording that video signal, together with the mode designation signal detected by said first detection means (10), onto a recording medium;
reproduction means (40) for reading the recorded video signal and the recorded mode designation signal from the recording medium;
second detection means (42) for detecting the mode designation signal from the signals read by the reproduction means (40);
switching means (35, 50) for receiving the analog video output signal and the read video signal from said mode conversion means (30) and said reproduction means (40), respectively, and selectively outputting a selected one of the analog video output signal and the read video signal, wherein the selection by said switching means is governed by a reception mode signal (HD/) and a reproduction mode signal (PB/);
display means for displaying the selected video signal output from said switching means;
a microprocessor (16) for generating a control signal controlling display of the mode designation signal detected by said first detection means (10) and the recorded mode designation signal detected by said second detection means (42) on said display means in correspondence with the selected video signal currently displayed on said display means; and
processing means (17, 60) for receiving the control signal and processing and displaying the detected/recorded mode designation signal for the selected video signal output on said display means in accordance with the control signal.

2. An apparatus according to claim 1, wherein said processing means comprises an on-screen display signal generator (17) for generating an OSD signal upon receiving the control signal, and a mixer (60) for mixing the selected video signal from said switching means (50) and the OSD signal from said on-screen display signal generator and for supplying the mixed signal to said display means.

3. An apparatus according to claim 1 or 2, wherein said processing means comprises two light emitting diodes (LED₁, LED₂) for representing, respectively the high definition television broadcasting mode and the standard television broadcasting mode.

4. An apparatus according to claim 1, 2 or 3, wherein said second detection means (42-44) comprises a sync detector (42) for detecting a sync signal from the read video signal from the reproduction means (40) and a mode designation signal detector (43, 44) for detecting the recorded mode designation signal from the read video signal.

5. An HDTV television and/or video recorder and/or player provided with apparatus according to any of the preceding claims.

## Patentansprüche

1. Vorrichtung zum Anzeigen einer Übertragungsmodusangabe für die Verwendung in einer Videoeinrichtung zum Aufzeichnen und Wiedergeben eines Videosignals des High Definition-Fernsehübertragungsmodus und eines anderen Videosignals eines herkömmlichen Fernsehübertragungsmodus, wobei beide Videosignale als extern angelegte Videosignale über Empfangskanäle eingegeben werden können, wobei die Vorrichtung umfaßt:
eine erste Feststellungseinrichtung (10) zum Demodulieren des extern angelegten Videosignals und zum Feststellen eines Modusangabesignals, das angibt, ob das demodulierte Videosignal im High Definition-Fernsehübertragungsmodus oder im herkömmlichen Fernsehübertragungsmodus ist,
eine Modusumwandlungseinrichtung (30) zum Verarbeiten von demodulierten herkömmlichen Fernsehsignalen und HDTV-Signalen, die aus der ersten Feststellungseinrichtung ausgegeben werden, um ein verarbeitetes Videoausgabesignal vorzusehen, wobei wenn das extern angelegte Videosignal ein herkömmliches Fernsehsignal ist, das demodulierte herkömmliche Fernsehsignal zu einem Videosignal umgewandelt wird, das auf einer Anzeigeeinrichtung des High Definition-Fernsehübertragungstyps angezeigt werden kann, und wenn das extern angelegte Videosignal bereits vom High Definition-Fernsehübertragungstyp ist, das demodulierte HDTV-Signal nicht umgewandelt wird, sowie zum Umwandeln des derart verarbeiteten Videoausgabesignals zu einem analogen Videoausgabesignal,
eine Aufzeichnungseinrichtung (20) zum Empfangen der verarbeiteten Videosignalausgabe aus der Modusumwandlungseinrichtung (30) und zum Aufzeichnen des Videosignals zusammen mit dem durch die erste Feststellungseinrichtung (10) festgestellten Modusangabesignal auf einem Aufzeichnungsmedium.
eine Wiedergabeeinrichtung (40) zum Lesen des aufgezeichneten Videosignals und des aufgezeichneten Modusangabesignals von dem Aufzeichnungsmedium,
eine zweite Feststellungseinrichtung (42) zum Feststellen des Modusangabesignals aus den durch die Wiedergabeeinrichtung (40) gelesenen Signalen,
eine Schalteinrichtung (35, 50) zum Empfangen des analogen Videoausgabesignals und des gelesenen Videosignals von jeweils der Modusumwandlungseinrichtung (30) und der Wiedergabeeinrichtung (40) und zum wahlweisen Ausgeben des analogen Videoausgabesignals oder des gelesenen Videosignals, wobei die Auswahl der Schalteinrichtung durch ein Empfangsmodussignal (HD/) und ein Wiedergabemodussignal (PB/) gesteuert wird,
eine Anzeigeeinrichtung zum Anzeigen des ausgewählten Videosignals, das aus der Schalteinrichtung ausgegeben wird,
einen Mikroprozessor (16) zum Erzeugen eines Steuersignals, das die Anzeige des durch die erste Feststellungseinrichtung (10) festgestellten Modusangabesignals und des durch die zweite Feststellungseinrichtung (42) festgestellten aufgezeichneten Modusangabesignals auf der Anzeigeeinrichtung in Übereinstimmung mit dem ausgewählten Videosignal steuert, das aktuell auf der Anzeigeeinrichtung angezeigt wird, und
eine Verarbeitungseinrichtung (17, 60) zum Empfangen des Steuersignals und zum Verarbeiten und Anzeigen des festgestellten/aufgezeichneten Modusangabesignals für die ausgewählte Videosignalausgabe auf der Anzeigeeinrichtung in Übereinstimmung mit dem Steuersignal.

2. Vorrichtung nach Anspruch 1, wobei die Verarbeitungseinrichtung einen On-Screen-Display-(OSD)-Signalerzeuger (17) zum Erzeugen eines OSD-Signals bei Empfang des Steuersignals sowie einen Mischer (60) zum Mischen des ausgewählten Videosignals von der Schalteinrichtung (50) und des OSD-Signals von dem On-Screen-Display-Signalerzeuger sowie zum Ausgeben des gemischten Signals an die Anzeigeeinrichtung umfaßt.

3. Vorrichtung nach Anspruch 1 oder 2, wobei die Verarbeitungseinrichtung zwei lichtemittierende Dioden (LED₁, LED₂) umfaßt, um jeweils den High Definition-Femsehübertragungsmodus und den herkömmlichen Fernsehübertragungsmodus anzugeben.

4. Vorrichtung nach Anspruch 1, 2 oder 3, wobei die zweite Feststellungseinrichtung (42-44) eine Synchronisation-Feststellungseinrichtung (42) zum Feststellen eines Synchronisationssignals in dem gelesenen Videosignal von der Wiedergabeeinrichtung (40) und eine Modusangabesignal-Feststellungseinrichtung (43, 44) zum Feststellen des aufgezeichneten Modusangabesignals in dem gelesenen Videosignal umfaßt.

5. HDTV-Fernseher und/oder -Videorecorder und/oder -Player mit einer Vorrichtung in Übereinstimmung mit wenigstens einem der vorstehenden Ansprüche.

## Revendications

1. Dispositif servant à visualiser une indication de mode de diffusion, à usage dans un appareil vidéo servant à enregistrer et reproduire un signal vidéo dans un mode d'émission de programmes de télévision à haute définition ou un autre signal vidéo dans un mode d'émission de programmes de télévision standard, lesquels signaux vidéo des deux types pouvant être introduits par l'intermédiaire de canaux de réception en tant que signal vidéo fourni par une source extérieure, ledit dispositif comprenant:
un premier moyen de détection (10) pour démoduler le signal vidéo fourni par une source extérieure et pour détecter un signal d'indication de mode indiquant si le signal vidéo démodulé est dans le mode d'émission de programmes de télévision à haute définition ou dans le mode d'émission de programmes de télévision standard;
un moyen de conversion de mode (30) pour: traiter des signaux démodulés de TV standard ou de TV à haute définition fournis par le premier moyen de détection pour fournir un signal de sortie vidéo traité de façon que, si le signal vidéo fourni par une source extérieure correspond à un signal de TV standard, le signal de TV standard démodulé soit converti en un signal vidéo pouvant être visualisé sur un moyen de visualisation du type télévision à haute définition, et si le signal vidéo fourni par une source extérieure est déjà du type émission de programmes de télévision à haute définition, le signal de TV à haute définition démodulé ne subisse pas de conversion de mode; et convertir le signal de sortie vidéo ainsi traité en un signal de sortie vidéo analogique;
un moyen d'enregistrement (20) pour recevoir le signal vidéo traité fourni par ledit moyen de conversion de mode (30) et pour enregistrer ce signal vidéo, ainsi que le signal d'indication de mode détecté par ledit premier moyen de détection (10), sur un support d'enregistrement;
un moyen de reproduction (40) pour lire le signal vidéo enregistré et le signal d'indication de mode enregistré sur le support d'enregistrement;
un deuxième moyen de détection (42) pour détecter le signal d'indication de mode à partir des signaux lus par le moyen de reproduction (40);
un moyen de commutation (35, 50) pour recevoir le signal de sortie vidéo analogique et le signal vidéo lu provenant respectivement dudit moyen de conversion de mode (30) et dudit moyen de reproduction (40), et pour envoyer de façon sélective un signal sélectionné parmi le signal de sortie vidéo analogique et le signal vidéo lu, la sélection effectuée par ledit moyen de commutation étant commandée par un signal de mode de réception (HD/) et un signal de mode de reproduction (PB/);
un moyen de visualisation pour visualiser le signal vidéo sélectionné fourni par ledit moyen de commutation;
un microprocesseur (16) pour générer un signal de commande commandant la visualisation, sur ledit moyen de visualisation, du signal d'indication de mode détecté par ledit premier moyen de détection (10) et du signal d'indication de mode enregistré détecté par ledit deuxième moyen de détection (42), en correspondance avec le signal vidéo sélectionné en cours de visualisation sur ledit moyen de visualisation; et
un moyen de traitement (17, 60) pour recevoir le signal de commande, et traiter et visualiser sur ledit moyen de visualisation le signal détecté/enregistré d'indication de mode du signal vidéo sélectionné fourni en sortie d'après le signal de commande.

2. Dispositif selon la revendication 1, dans lequel ledit moyen de traitement comprend un générateur de signal de visualisation sur écran (17) pour générer un signal de visualisation sur écran lors de la réception du signal de commande, et un mélangeur (60) pour mélanger le signal vidéo sélectionné provenant dudit moyen de commutation (50) et le signal de visualisation sur écran provenant dudit générateur de signal de visualisation sur écran et pour envoyer le signal mélangé audit moyen de visualisation.

3. Dispositif selon la revendication 1 ou 2, dans lequel ledit moyen de traitement comprend deux diodes lumineuses (LED₁, LED₂) pour indiquer respectivement le mode d'émission de programmes de télévision à haute définition et le mode d'émission de programmes de télévision standard.

4. Dispositif selon la revendication 1, 2 ou 3, dans lequel ledit deuxième moyen de détection (42-44) comprend un détecteur de synchronisation (42) pour détecter un signal de synchronisation dans le signal vidéo lu provenant du moyen de reproduction (40), et un détecteur de signal d'indication de mode (43, 44) pour détecter le signal d'indication de mode enregistré dans le signal vidéo lu.

5. Télévision à haute définition et/ou enregistreur et/ou lecteur vidéo muni d'un dispositif selon l'une quelconque des revendications précédentes.
